(19) Europäisches Patentamt
European Patent Office
Office européen des brevets

(11) **EP 3 026 127 A1**

(12) **EUROPEAN PATENT APPLICATION**
published in accordance with Art. 153(4) EPC

(43) Date of publication:
**01.06.2016 Bulletin 2016/22**

(21) Application number: **14829588.4**

(22) Date of filing: **16.07.2014**

(51) Int Cl.:
*C21D 1/52* (2006.01)          *C21D 9/00* (2006.01)
*F23L 15/02* (2006.01)          *F27D 19/00* (2006.01)

(86) International application number:
**PCT/KR2014/006440**

(87) International publication number:
**WO 2015/012523 (29.01.2015 Gazette 2015/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **22.07.2013 KR 20130086219**

(71) Applicant: SAC Co. Ltd.
**Asan-si, Chungcheongnam-do 336-831 (KR)**

(72) Inventors:
• **JANG, Byoung Lok**
**Bucheon-si**
**Gyeonggi-do 420-708 (KR)**

• **HAN, Seung Hoon**
**Cheonan-si**
**Chungcheongnam-do 331-793 (KR)**
• **AN, Min Hwan**
**Cheonan-si**
**Chungcheongnam-do 331-750 (KR)**

(74) Representative: **Benson, Christopher**
**HGF Limited**
**4th Floor, Merchant Exchange**
**17-19 Whitworth Street West**
**Manchester M1 5WG (GB)**

(54) **DEVICE AND METHOD FOR CONTROLLING COMBUSTION EXHAUST GAS OF REGENERATIVE HEATING FURNACE**

(57)    Provided is a method of controlling combustion of a regenerative heating furnace. The method controlled includes: a first step of sensing the temperature inside the furnace by a temperature sensor inside the heating furnace; a second step of receiving the measured temperature value inside the furnace, comparing the measured temperature value with a set reference temperature value, and outputting, to a sequence controller, an analog signal corresponding to a difference between the measured temperature value inside the furnace and the set reference temperature value; a third step of controlling combustion, and amounts of fuel, air, and discharged combustion gas of each of the burners by the sequence controller by a program set according to the outputted value in the second step; a fourth step of measuring the pressure inside the heating furnace due to combustion gas according to a combustion load; a fifth step of comparing the measured pressure value with the reference pressure, and outputting, the sequence controller, an analog signal corresponding to a difference between the measured pressure value and the reference pressure; and a sixth step of controlling, according to the outputted value of the fifth step, the discharge amount of combustion gas set in the third step by the sequence controller.

FIG. 1

**Description**

**TECHNICAL FIELD**

The present invention disclosed herein relates to a heating furnace for heating a material to a forgeable temperature in a forged steel producing process, and more particularly, to a control method and a control apparatus which control the amounts of fuel, combustion air, and combustion exhaust gas in a regenerative heating furnace using a regenerative combustion burner, so that the pressure inside the furnace due to combustion gas is appropriately controlled, and the entire exhaust gas is used for storing heat in a heat storage medium for heat exchange.

**BACKGROUND ART**

In general, in a steel production process, a heating furnace is used for heating a material to a target temperature, and a burner using a mixed gas as fuel is mostly used, and in recent years, there is an increasing trend of using a regenerative burner so as to save fuel.

In all burners installed in typical heating furnaces, combustion is continuously performed, and exhaust gas generated therein is recovered through a recuparator which is a heat-exchange apparatus. However, in case of a regenerative burner, the burner itself is provided with a heat storage medium and thus has a structure in which a separate burner is not used, and in which two burners facing each other are formed in a set such that one-sided burner performs combustion for a predetermined time, and the exhaust gas generated therein is intaken into the other-sided burner to be stored in an alumina-based ceramic ball which is a heat storage medium.

After a predetermined time (about 60 seconds to 90 seconds), the burner in the combustion state is stopped, the other-sided burner in the state of storing heat into the heat storage medium starts combustion, and at the same time, air for combustion is allowed to pass through the heat storage medium such that the air for combustion is preheated to a high temperature. That is, the aforementioned regenerative combustion system is a combustion apparatus in which a pair of burners facing each other are provided in one set such that an alternate combustion is performed; and when a an operation standby burner and an operating burner are alternately used, heat-exchange is performed through a heat storage medium of the burner in the operation standby state, and the heat accumulated in the heat storage medium is transferred to the combustion air, so that the heat contained in combustion exhaust gas may be recovered.

This energy recycling burner performs combustion through two methods according to the temperature of a heating furnace. When the temperature of the heating furnace is a predetermined temperature (in general, about 800°C to about 900°C) or lower, a primary combustion method through a pilot burner is used, and when the temperature of the heating furnace is a predetermined temperature (about 800°C to about 900°C) or higher, a spontaneous combustion occurs and in this case, fuel gas is injected from a separate nozzle such that the high temperature combustion air passing through the heat storage medium inside the burner is mixed in the heating furnace to ignite the fuel gas.

In case of combustion of a typical burner, only about 80% of the total generated combustion exhaust gas is used for heat storage by the other-sided burner. This is for controlling the pressure inside the furnace by using the remaining about 20% of exhaust gas. Here, the about 20% of the exhaust gas is discharged to the air as high temperature waste gas through an exhaust duct. The reason the control of the ambient pressure inside the furnace (furnace pressure) is required is that when the furnace pressure becomes a negative pressure, ambient air is introduced into the furnace and thus not only makes the temperature or the atmosphere inside the furnace unstable, but also causes an energy loss because the amount of the introduced air is excessive.

On the contrary, when the furnace pressure is a positive pressure, the gas inside the furnace leaks from a gap around a material loading gate to cause an energy loss and also causes damage to the furnace body. The furnace pressure is generally measured at a place adjacent to the top of the furnace or at a height to which materials to be heated are stacked, and the measured value is automatically controlled to be within a range of about 0 to about 5 mmH$_2$O through a control damper installed on the exhaust duct.

Referring to typical flow control methods, a double cross limit control for fuel gas and combustion air is performed such that an output of a temperature control meter and a cascade control signal of a gas/air amount control meter are configured as a parallel circuit. In an excessive or deficient state, the upper and lower limit values of a gas-to-air ratio value are determined according to increase and decrease parameters which are set such that the fuel and the air amounts do not exceed or fall short of the measurement values.

That is, typical techniques use only about 80% of the combustion gas generated in combustion and discharge about 20% of the high temperature combustion gas (about 1200°C to about 1250°C), and thus cause an energy loss.

Also, typical techniques require a separate exhaust gas discharge duct to discharge about 20% of the combustion gas generated in combustion to the outside, and since the temperature of the combustion gas is high, there is a disadvantage in that a separate refractory for heat insulation inside the exhaust duct should be installed.

## DISCLOSURE OF THE INVENTION

## TECHNICAL PROBLEM

The present invention provides an apparatus and a method for controlling combustion exhaust of a regenerative heating furnace for minimizing energy loss due to combustion exhaust gas and maximizing energy saving by using about 100 % of the exhaust gas generated in an industrial heating furnace for heat exchange required for preheating combustion air.

The present invention also provides an apparatus and a method for controlling combustion exhaust of a regenerative heating furnace in which about 20% of high temperature combustion gas discharged to the air is reused for preheating combustion air, and the pressure inside the furnace can also be controlled.

The present invention also provides an apparatus and a method for controlling combustion exhaust of a regenerative heating furnace in which amounts of fuel and combustion air, and discharge amount of exhaust gas are controlled according to a combustion load in a heating furnace using regenerative burners, and through this, the pressure inside the furnace can be controlled.

The object of the present invention is not limited to the aforesaid, but other objects not described herein will be clearly understood by those skilled in the art from descriptions below.

## TECHNICAL SOLUTION

Embodiments of the present invention provide a method for controlling combustion exhaust of a regenerative heating furnace, the heating furnace having burners installed therein and being configured to control combustion amounts of the burners, amounts of fuel and combustion air supplied to the burners, and a discharge amount of combustion exhaust gas.

In embodiments of the present invention, the method includes: a first step of sensing the temperature inside the furnace by a temperature sensor inside the heating furnace; a second step of receiving the measured temperature value inside the furnace, comparing the measured temperature value with a set reference temperature value, and outputting, to a sequence controller, an analog signal corresponding to a difference between the measured temperature value inside the furnace and the set reference temperature value; a third step of controlling combustion, and amounts of fuel, amounts of air, and discharged combustion gas of each of the burners by the sequence controller by a program set according to the outputted value in the second step; a fourth step of measuring the pressure inside the heating furnace due to combustion gas according to a combustion load; a fifth step of comparing the measured pressure value with the reference pressure, and outputting, to the sequence controller, an analog signal corresponding to a difference between the measured pressure value and the reference pressure; and a sixth step of controlling, according to the outputted value of the fifth step, the discharge amount of combustion gas set in the third step by the sequence controller.

In other embodiments, when the burners alternately perform the combustion in the third step, shutoff valves for fuel and air may be opened such that the one-sided burner performing the combustion may start combustion, and a shutoff valve for combustion gas may be opened such that the other-sided burner may exhaust the combustion gas.

In still other embodiments, the shutoff valves for fuel and air of the one-sided burner performing the combustion may be opened after a delay by an input value with respect to the shutoff valve for combustion exhaust gas of the other-sided burner such that the pressure inside the furnace may be prevented from rising due to the combustion gas.

In even other embodiments, in the sixth step, the sequence controller may apply a factor to the discharge amount of combustion gas which is set in the third step to control the discharge amount of combustion gas.

In yet other embodiments, when the measured pressure value is smaller than the reference pressure in the sixth step, a factor of about 0.9 to about 0.99 may be applied such that an amount smaller than the amount of combustion gas generated inside the furnace may be discharged and the pressure inside the furnace may thereby be increased.

In further embodiments, when the measured pressure value is greater than the reference pressure in the sixth step, a factor of about 1.01 to about 1.1 may be applied such that an amount greater than the amount of combustion gas generated inside the furnace may be discharged and the pressure inside the furnace may thereby be decreased.

In still other embodiments of the present invention, an apparatus for controlling combustion gas of a regenerative heating furnace, includes: a heating furnace in which regenerative burners are installed; a fuel gas line and a combustion air line respectively supplying fuel and air to the regenerative burners; a combustion gas line for storing heat of combustion gas generated when the regenerative burners perform combustion; a thermometer and a pressure transducer which measure a temperature and a pressure inside the heating furnace; and a sequence controller controlling combustion, and amounts of fuel, air, and discharged combustion gas of the regenerative burners, wherein the sequence controller controls the regenerative burners such that supplies of fuel and air to a burner performing combustion is delayed by a predetermined input value with respect to a discharge of combustion gas of a burner not performing combustion.

In some embodiments, the sequence controller may compare the measured pressure value and the reference pressure to apply a factor to the discharge amount of combustion gas.

In other embodiments, when the measured pressure value is smaller than the reference pressure, the sequence controller may apply a factor of about 0.9 to about 0.99 to the discharge amount of combustion gas.

In still other embodiments, when the measured pressure value is greater than the reference pressure, the sequence controller may apply a factor of about 1.01 to about 1.1 to the discharge amount of combustion gas.

In even other embodiments of the present invention, an apparatus for controlling combustion gas of a regenerative heating furnace, includes: a temperature measuring part for measuring a temperature inside the furnace; a pressure measuring part for measuring a pressure inside the furnace; a control unit for selecting output values of combustion burner, fuel gas, combustion air, and combustion exhaust gas by comparing the measured values and reference values; an regulator for regulating the combustion of the burners and amounts of fuel gas, combustion air, and combustion exhaust gas according to a signal from the control part.

In yet other embodiments of the present invention, an apparatus for controlling combustion gas of a regenerative heating furnace in which regenerative burners provided in pairs are used to heat a material in the heating furnace, the apparatus includes: a fuel gas line and a combustion air line for combustion of the burners; a combustion gas line for storing heat of combustion gas generated during combustion; flowmeters installed on main lines for fuel gas, combustion air, and combustion exhaust gas; a thermometer and a pressure transducer for compensating the measured flow rate for the temperature and the pressure; a flow control valve for controlling the flow rate; a thermometer and a pressure transducer for measuring the temperature and the pressure inside the furnace; a separate combustion gas controlling valve for controlling by measuring the pressure inside the furnace; and a single combustion exhaust line configured for storing heat without installing a line.

## ADVANTAGEOUS EFFECTS

According to embodiments of the present invention, about 100% of exhaust gas is used for heat exchange, a furnace pressure control system is also applied, and thus there are particular effects in that appropriate product quality can be maintained and the efficiency of saving consumption energy can be maximized.

Also, according to embodiments of the present invention, high temperature combustion exhaust gas (about 20%) which has been discharged to the air to control the pressure inside typical furnaces is used for storing heat and preheating combustion air, and thus there is a particular effect in that energy used for the heating furnace may be saved.

## BRIEF DESCRIPTION OF THE DRAWINGS

FIG. 1 is a schematic view illustrating an apparatus for controlling a regenerative heating furnace according to an embodiment of the present invention;

FIG. 2 is a flow chart illustrating a method for controlling a regenerative heating furnace according to an embodiment of the present invention; and

FIG. 3 is a table comparing combustion gas amounts and energy consumption ratios of a typical regenerative heating furnace and a regenerative heating furnace according to the present invention.

## MODE FOR CARRYING OUT THE INVENTION

Hereinafter, an apparatus and a method of controlling combustion exhaust for a regenerative heating furnace according to an embodiment of the present invention will be described in detail with reference to the accompanying drawings. Moreover, detailed descriptions related to well-known functions or configurations will be ruled out in order not to unnecessarily obscure subject matters of the present invention.

In embodiments, a heating furnace may be a heating furnace for heating a material to a forgeable temperature in a forged steel producing process. However, the heating furnace is not limited thereto, and may be other kinds of heating furnaces.

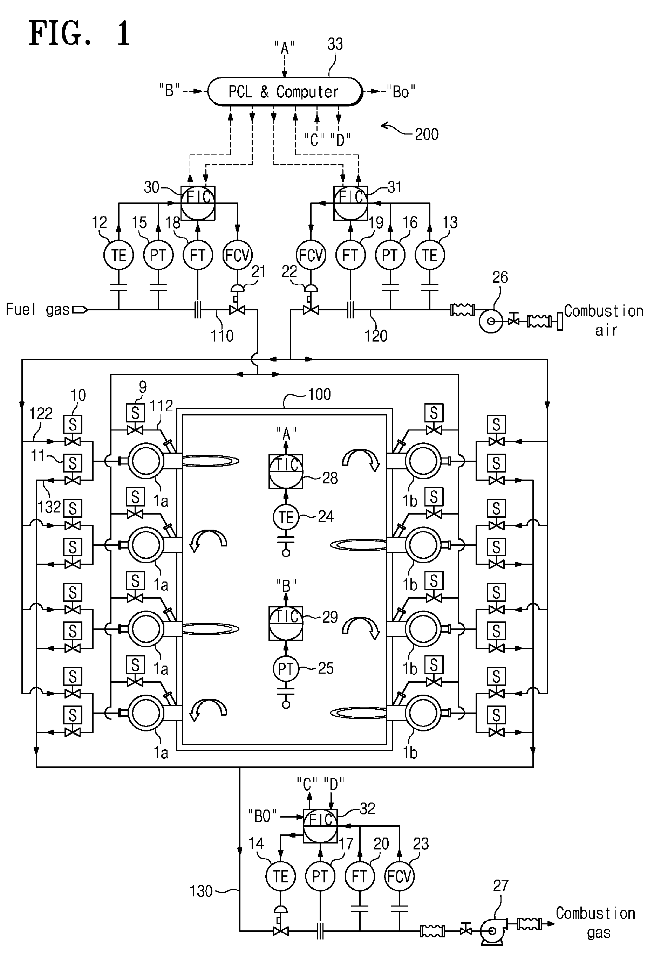

FIG. 1 is a schematic view illustrating an apparatus for controlling a regenerative heating furnace according to an embodiment of the present invention.

As illustrated in FIG. 1, a regenerative heating furnace 100 includes regenerative burners 1a and 1b installed to face each other on left and right sides thereof. Here, two regenerative burners 1a and 1b facing each other form a pair. For example, when four pairs of regenerative burners 1a and 1b are installed, first burners 1a are in a combustion state and second burners 1b installed as a pair are in an exhaust state according to a predetermined period (e.g. about 1 minute), and then at a switching time after the predetermined period, the first burners 1a become an exhaust state and the second burners 1b become a combustion state. That is, the two regenerative burners 1a and 1b facing each other are alternately (by turns) switched between a combustion mode (ignition) and an exhaust mode (extinction) at the predetermined period, that is, a switching timing. A thermometer 24 for measuring the temperature inside the furnace, and a pressure transducer 25 for measuring the pressure inside the furnace are installed inside the regenerative heating furnace 100.

A fuel gas line 112 and a combustion air line 122 for combustion, and a combustion gas line 132 for intaking combustion gas generated inside the heating furnace 100 into a heat storage device of the regenerative burners 1a and 1b are installed to each of the regenerative burners 1a and 1b.

A gas shutoff valve 9 is installed on the fuel gas line 110 connected to each of the regenerative burners 1a and 1b, and the gas shutoff valves 9 are connected to a single main fuel gas line 110.

A flowmeter 18 and a flow rate control valve 21 are installed on the main fuel gas line 110, and a thermometer 12 and a pressure transducer 15 are installed to compensate the flow rate measured by the flowmeter 18 for the temperature and the pressure of fluid.

The shutoff valves 10 and 11 are respectively installed on the combustion air line 122 and combustion gas line 132 of each of the regenerative burners 1a and 1b to be independently operated, and are respectively connected to a single main combustion air line 120 and a single combustion gas line 130.

flowmeters and flow rate control valves 19 and 22 and 20 and 23 are respectively installed on the main combustion air line 120 and the main combustion gas line 130, and thermometers and pressure transducers 13 and 16 14 and 17 are respectively installed to compensate the flow rates measured by flowmeters 19 and 20 for the temperature and pressure of fluid.

Also, a combustion air blower 26 for supplying combustion air and a combustion gas discharge fan 27 for discharging combustion gas are installed on the main combustion air line 120 and the main combustion gas line 130, respectively.

The control unit 200 may include flow controllers (FIC) 30, 31 and 32, a temperature indication controller (TIC) 28, pressure indicator controllers (PIC) 29, and a sequence controller 33.

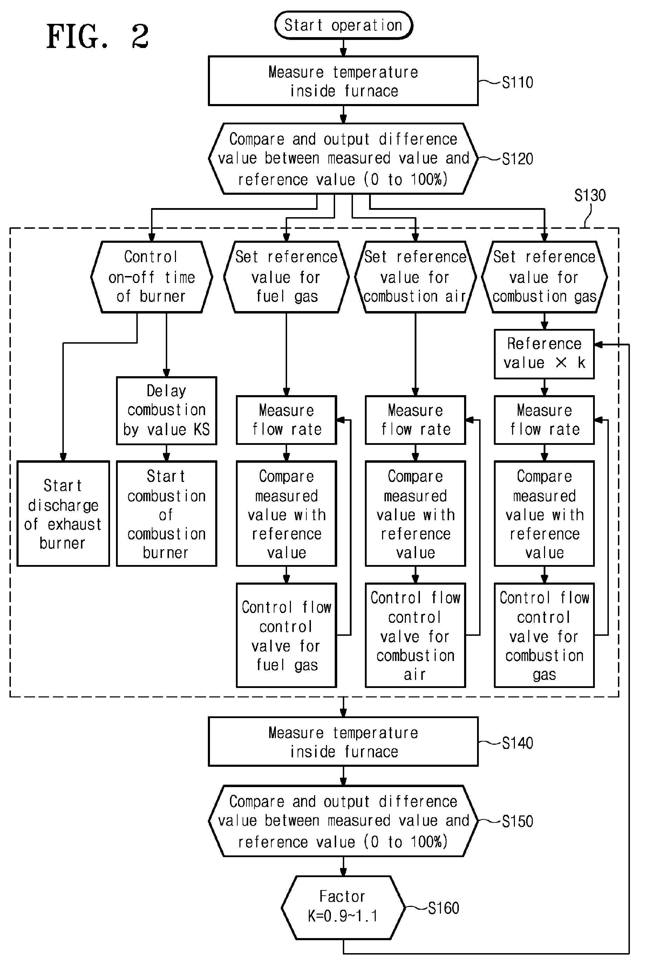

FIG. 2 is a flow chart illustrating a method for controlling a regenerative heating furnace according to an embodiment of the present invention.

Referring to FIGS. 1 and 2, a control system will be described step by step as follows according to operations of the heating furnace.

A first step: a temperature sensor in the heating furnace 100 measures the temperature inside the furnace through an inner thermometer (TE) 24 in a temperature detection way inside the furnace.

A second step: a measured value of the temperature inside the furnace is compared with a set reference temperature value, and an analog signal according to a temperature difference value is outputted to the sequence controller 33. That is, the temperature value measured by the thermometer 24 is compared with the target reference temperature value of the temperature indicator controller (TIC) 28, and an analog signal according to the difference value between the measured value and the reference temperature value is outputted to the sequence controller (PLC) 33.

A third step: each of the combustion amounts of the burners, fuel, air, and combustion exhaust gas, which are set according to the outputted values, is controlled by a program. The sequence controller 33 adjusts combustion times of the burners, and amounts of the fuel gas, combustion air, and combustion exhaust gas by the program set according to the outputted values. According to the outputted values, an on-off time of the burner combustion is controlled. When the pair of regenerative burners 1a and 1b perform combustion, the one-sided burners (combustion mode) performing the combustion start the combustion by opening the shutoff valves 9 and 10 of fuel and air, and the other-sided burners (exhaust mode) exhaust the combustion gas by opening the combustion gas shutoff valve 11. Here, the opening of the fuel and air shutoff valves 9 and 10 of the one-sided burners in the combustion mode is delayed by an input value KS (about 1 second to about 2 seconds) compared with that of the combustion gas shutoff valve 11, so that the exhaust of the combustion gas is firstly performed to prevent the pressure inside the furnace from being increased by the combustion gas.

The sequence controller 33 controls the combustion of the burners and also outputs flow rate values set by a device for controlling amounts of fuel gas, combustion air, and combustion gas to adjust the flow rate.

In typical regenerative heat furnaces, although amounts of fuel gas and combustion gas are controlled according to the output value of combustion air according to combustion control of burners, in that case, fuel combustion is firstly performed and the control of the combustion gas is then performed, so that excessive pressure in the combustion gas inside the furnaces may be temporarily generated. Thus, in cases of typical furnaces, an exhaust line capable of separately discharging about 20% of the total combustion gas is installed and a combustion gas control damper is installed so as to prevent a temporary excessive pressure rise.

To prevent the pressure rise in a furnace without installing such a separate exhaust line, the present invention simultaneously performs the combustion control of burners and the control of flow rates of the fuel gas, the combustion air, and the combustion gas according to the combustion.

The amounts of the combustion air and the combustion gas are programmed through an equation below.

Combustion air equation: AG= G0×(m-1)×A0    AG= G0×(m-1)×A0

Exhaust gas equation: FG = G0×{(m-1)×A0+E0} FG = G0×{(m-1)×A0+E0}

EG: Exhaust gas amount, G0: Fuel gas amount, m: Excessive air ratio, A0: Theoretical air amount, E0: Theoretical exhaust gas amount

The flow rate measured by each of the flowmeters 18, 19, and 20 is compensated by each of the pressure transducers 15, 16, and 17 and each of thermometers 12, 13, and 14, and is indicated and controlled as a flow rate with respect to a standard pressure and temperature (1 atm, 0°C).

A fourth step: measuring the pressure inside the furnace according to a combustion load

The pressure inside the furnace which is generated by the combustion gas according to a combustion load is measured through the pressure transducer (PT) 25.

A fifth step: outputting an analog signal after comparing the measured pressure inside the furnace with the reference pressure.

The pressure value measured by the pressure transducer 25 is compared with the reference pressure targeted by the temperature indicator controller (PIC) 29 and an analog signal according to the temperature difference value is then outputted to the sequence controller (PLC) 33.

A sixth step: controlling the discharge amount of combustion exhaust gas by a program preset according to the outputted value. According to the outputted value, the sequence controller 33 further controls the amount of combustion gas by applying a factor for the amount of combustion gas set in the third step. Although the amount of combustion gas is controlled by the values calculated by the control in the third step, the pressure inside the furnace is appropriately maintained by applying a factor of about 0.9 to about 1.1 to the amount of combustion gas set by further measuring the pressure inside the furnace because the pressure inside the furnace may be changed by additional elements.

For example, when being smaller than the set reference pressure, the pressure inside the furnace is increased by applying a factor of about 0.9 to reduce the amount of combustion gas, and when being greater than the reference pressure, the pressure inside the furnace is decreased by applying a factor of about 1.1 to exhaust the amount of combustion gas more than the amount of generated combustion gas. For reference, when the pressure inside the furnace is smaller than the set reference pressure, the factor value may be changed within a range of about 0.99 to 0.9 according to the pressure difference, and when the pressure inside the furnace is greater than the set reference pressure, the factor value may be changed within a range of about 1.01 to 1.1 according to the pressure difference,

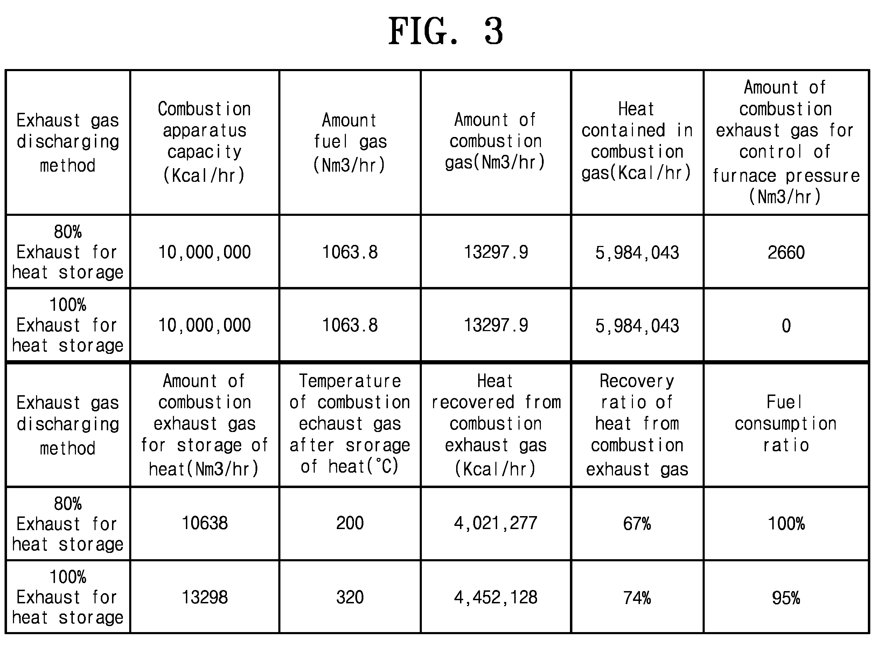

FIG. 3 is a table comparing amounts of combustion gas and energy consumption ratios of a typical regenerative heating furnace and a regenerative heating furnace according to an embodiment of the present invention. The table is based on a combustion capacity of about 10,000,000 kcal/hr, and it may be understood that about 5% of fuel is saved compared with the typical heating furnace from the amounts of combustion gas and the energy consumption ratios of the heating furnace according to the present invention.

As described above, the present invention fixes the problem of a system in which a portion (about 20%) of high temperature combustion gas is discharged to the air to control the pressure inside the furnace in typical heating furnaces, and thus about 100% of the combustion gas generated in the combustion is used for heat storage and the pressure inside the furnace is simultaneously controlled.

The above-disclosed subject matter is to be considered illustrative, and not restrictive, and various modifications and changes can be made by those skilled in the art pertaining to the present invention without departing from the true spirit and scope of the present invention. The above-disclosed embodiments are to be considered illustrative, and not restrictive, and the inventive concept of the present invention shall not be limited by the embodiments. The protective scope of the present invention shall be determined by the technical scope of the accompanying Claims. The following claims and all technical spirits falling within equivalent scope are construed as being included in the scope of rights of the present invention.

## Claims

1. A method for controlling combustion of a regenerative heating furnace the heating furnace having regenerative burners installed therein and being configured to control combustion amounts of the burners, amounts of fuel and combustion air supplied to the burners, and a discharge amount of combustion exhaust gas, the method comprising:

a first step of sensing the temperature inside the furnace by a temperature sensor inside the heating furnace;

a second step of receiving the measured temperature value inside the furnace, comparing the measured temperature value with a set reference temperature value, and outputting, to a sequence controller, an analog signal corresponding to a difference between the measured temperature value inside the furnace and the set reference temperature value;

a third step of controlling combustion, and amounts of fuel, amounts of air, and discharged combustion gas of each of the burners controlled by the sequence controller by a program set according to the outputted value in the second step;

a fourth step of measuring the pressure inside the heating furnace due to combustion gas according to a combustion load;

a fifth step of comparing the measured pressure value with the reference pressure, and outputting, to the sequence controller, an analog signal corresponding to a difference between the measured pressure value and the reference pressure; and

a sixth step of controlling, according to the outputted value of the fifth step, the discharge amount of combustion gas set in the third step by the sequence controller.

2. The method of claim 1, wherein when the burners alternately perform the combustion in the third step, shutoff valves for fuel and air are opened such that the one-sided burner performing the combustion starts combustion, and a shutoff valve for combustion gas is opened such that the other-sided burner exhausts the combustion gas.

3. The method of claim 1 or 2, wherein the shutoff valves for fuel and air of the one-sided burner performing the combustion are opened after a delay by an input value with respect to the shutoff valve for combustion gas of the other-side burner such that the pressure inside the furnace is prevented from rising due to the combustion gas.

4. The method of claim 1, wherein in the sixth step, a factor is applied to the discharge amount of combustion gas which is set in the third step of controlling the discharge amount of combustion gas by the sequence controller so as to controlling the pressure inside the furnace.

5. The method of claim 4, wherein when the measured pressure value is smaller than the reference pressure in the sixth step, a factor of about 0.9 to about 0.99 is applied such that an amount smaller than the amount of combustion gas generated inside the furnace is discharged to thereby increase the pressure inside the furnace.

6. The method of claim 4, wherein when the measured pressure value is greater than the reference pressure in the sixth step, a factor of about 1.0 to about 1.1 is applied such that an amount greater than the amount of combustion gas generated inside the furnace is discharged to thereby decrease the pressure inside the furnace.

7. An apparatus for controlling combustion gas of a regenerative heating furnace, the apparatus comprising:

a heating furnace in which regenerative burners are installed;

a fuel gas line and a combustion air line respectively supplying fuel and air to the regenerative burners;

a combustion gas line for storing heat of combustion gas generated when the regenerative burners perform combustion;

a thermometer and a pressure transducer which measure a temperature and a pressure inside the heating furnace; and

a sequence controller controlling combustion and amounts of fuel, air, and discharged combustion gas of the regenerative burners, wherein

the sequence controller controls the regenerative burners such that supplies of fuel and air to a burner performing combustion is delayed by a predetermined input value with respect to a discharge of combustion gas of a burner not performing combustion.

8. The apparatus of claim 7, wherein the sequence controller compares the measured pressure value measured by the pressure transducer and the reference pressure, and when the measured pressure value is smaller or greater than the reference pressure, the sequence controller applies a factor to the discharged amount of combustion gas.

9. The apparatus of claim 7, wherein when the measured pressure value is smaller than the reference pressure, the sequence controller applies a factor of about 0.9 to about 0.99 to the discharged amount of combustion gas.

10. The apparatus of claim 7, wherein when the measured pressure value is greater than the reference pressure, the sequence controller applies a factor of about 1.01 to about 1.1 to the discharged amount of combustion gas.

11. An apparatus for controlling combustion gas of a regenerative heating furnace, in which:

regenerative burners provided in pairs are used to heat a material in the heating furnace;
a fuel gas line and a combustion air line for combustion, and a combustion gas line for storing heat of combustion gas generated during combustion are connected to the regenerative burners;
the combustion gas line is connected to a main combustion gas line, and the combustion air line is connected to a main combustion air line; and
the combustion gas line is connected to a main combustion gas line and comprises:

a flowmeter, a thermometer, a pressure transducer and a flow control valve for controlling follow which are installed on each of the main fuel gas line, the main combustion air line, and the main combustion gas line;
a thermometer and a pressure transducer which measure a temperature and a pressure inside the heating furnace; and
a sequence controller controlling combustion and amounts of fuel, amounts of air, and discharged combustion gas of the regenerative burners, wherein
the sequence controller controls the regenerative burners such that supplies of fuel and air to a burner performing combustion is delayed by a predetermined input value with respect to a discharge of combustion gas of a burner not performing combustion, and
when the measured pressure value from the pressure transducer is smaller than the reference pressure, a factor of about 0.9 to about 0.99 is applied to a discharged amount of combustion gas, and
when the measured pressure value from the pressure transducer is greater than the reference pressure, a factor of about 1.01 to about 1.1 is applied to the discharged amount of combustion gas.

# FIG. 1

# FIG. 2

```
                          ( Start operation )
                                 │
                                 ▼
                    ┌──────────────────────────┐
                    │   Measure temperature    │──── S110
                    │      inside furnace       │
                    └──────────────────────────┘
                                 │
                                 ▼
                   ╱────────────────────────────╲
                  ╱ Compare and output difference ╲
                  ╲ value between measured value and╱──── S120
                   ╲ reference value (0 to 100%)  ╱
                    ╲──────────────────────────╱
```

S130

```
┌─────────────────────────────────────────────────────────────────────────────────────┐
│                                                                                       │
│   ╱──────────╲      ╱──────────╲      ╱──────────╲      ╱──────────╲                   │
│  ╱  Control   ╲    ╱    Set      ╲   ╱    Set      ╲   ╱    Set      ╲                 │
│  ╲ on-off time╱    ╲  reference  ╱   ╲  reference  ╱   ╲  reference  ╱                 │
│   ╲ of burner ╱     ╲ value for ╱     ╲ value for ╱     ╲ value for ╱                  │
│    ╲────────╱       ╲ fuel gas ╱      ╲combustion air╱  ╲combustion gas╱              │
│        │                  │                  │                  │                      │
│        │                  │                  │                  ▼                      │
│        │             ┌─────────┐             │           ┌───────────┐                │
│        │             │ Delay   │             │           │ Reference │◄──────┐        │
│        │             │combustion│            │           │ value × k │       │        │
│        │             │by value KS│           │           └───────────┘       │        │
│        │             └─────────┘             │                  │            │        │
│        │                  │                  │                  │            │        │
│        ▼                  ▼        ┌─────────┐│┌─────────┐┌─────────┐        │        │
│  ┌──────────┐      ┌──────────┐    │ Measure ││ Measure  ││ Measure │        │        │
│  │  Start   │      │  Start   │    │flow rate││ flow rate││flow rate│        │        │
│  │discharge │      │combustion│    └─────────┘│└─────────┘└─────────┘        │        │
│  │of exhaust│      │   of     │         │     │     │          │             │        │
│  │ burner   │      │combustion│         ▼     │     ▼          ▼             │        │
│  └──────────┘      │ burner   │    ┌─────────┐│┌─────────┐┌─────────┐        │        │
│                    └──────────┘    │Compare  ││ Compare  ││Compare  │        │        │
│                                    │measured ││ measured ││measured │        │        │
│                                    │value with││value with││value with│       │        │
│                                    │reference ││reference ││reference│        │        │
│                                    │ value   ││  value   ││ value   │        │        │
│                                    └─────────┘│└─────────┘└─────────┘        │        │
│                                         │     │     │          │             │        │
│                                         ▼     │     ▼          ▼             │        │
│                                    ┌─────────┐│┌─────────┐┌─────────┐        │        │
│                                    │Control  ││Control   ││Control  │        │        │
│                                    │flow     ││flow      ││flow     │        │        │
│                                    │control  ││control   ││control  │        │        │
│                                    │valve for││valve for ││valve for│        │        │
│                                    │fuel gas ││combustion││combustion│       │        │
│                                    └─────────┘││  air    ││  gas    │        │        │
│                                               │└─────────┘└─────────┘        │        │
└─────────────────────────────────────────────────────────────────────────────┘        
                                 │
                                 ▼
                    ┌──────────────────────────┐
                    │   Measure temperature    │──── S140
                    │      inside furnace       │
                    └──────────────────────────┘
                                 │
                                 ▼
                   ╱────────────────────────────╲
                  ╱ Compare and output difference ╲
                  ╲ value between measured value and╱──── S150
                   ╲ reference value (0 to 100%)  ╱
                    ╲──────────────────────────╱
                                 │
                                 ▼
                         ╱────────────╲
                        ╱   Factor     ╲──── S160
                        ╲  K=0.9~1.1   ╱
                         ╲────────────╱
```

# FIG. 3

| Exhaust gas discharging method | Combustion apparatus capacity (Kcal/hr) | Amount fuel gas (Nm3/hr) | Amount of combustion gas(Nm3/hr) | Heat contained in combustion gas(Kcal/hr) | Amount of combustion exhaust gas for control of furnace pressure (Nm3/hr) |
|---|---|---|---|---|---|
| 80% Exhaust for heat storage | 10,000,000 | 1063.8 | 13297.9 | 5,984,043 | 2660 |
| 100% Exhaust for heat storage | 10,000,000 | 1063.8 | 13297.9 | 5,984,043 | 0 |
| Exhaust gas discharging method | Amount of combustion exhaust gas for storage of heat(Nm3/hr) | Temperature of combustion echaust gas after srorage of heat(°C) | Heat recovered from combustion exhaust gas (Kcal/hr) | Recovery ratio of heat from combustion exhaust gas | Fuel consumption ratio |
| 80% Exhaust for heat storage | 10638 | 200 | 4,021,277 | 67% | 100% |
| 100% Exhaust for heat storage | 13298 | 320 | 4,452,128 | 74% | 95% |

<div align="center">

**INTERNATIONAL SEARCH REPORT**

</div>

| International application No. |
| --- |
| **PCT/KR2014/006440** |

| A. CLASSIFICATION OF SUBJECT MATTER |
| --- |
| ***C21D 1/52(2006.01)i, C21D 9/00(2006.01)i, F23L 15/02(2006.01)i, F27D 19/00(2006.01)i*** |
| According to International Patent Classification (IPC) or to both national classification and IPC |

| B. FIELDS SEARCHED |
| --- |
| Minimum documentation searched (classification system followed by classification symbols)<br>C21D 1/52; F23L 15/02; F23N 1/02; F23D 14/66; C21D 9/00; F27D 19/00 |
| Documentation searched other than minimum documentation to the extent that such documents are included in the fields searched<br>Korean Utility models and applications for Utility models: IPC as above<br>Japanese Utility models and applications for Utility models: IPC as above |
| Electronic data base consulted during the international search (name of data base and, where practicable, search terms used)<br>eKOMPASS (KIPO internal) & Keywords: thermal storage, burner, burning |

| C. DOCUMENTS CONSIDERED TO BE RELEVANT | | |
| --- | --- | --- |
| Category* | Citation of document, with indication, where appropriate, of the relevant passages | Relevant to claim No. |
| X | JP 08-061620A (OSAKA GAS CO LTD) 08 March 1996<br>See abstract, claim 1, paragraphs [0005]-[0008] and figures 1, 2. | 1-3,7 |
| A | JP 06-147461A (CHUGAI RO CO LTD) 27 May 1994<br>See abstract, claim 1, paragraphs [0014]-[0021] and figures 1, 2. | 1-11 |
| A | JP 08-035649A (CHUGAI RO CO LTD et al.) 06 February 1996<br>See abstract, claim 1, paragraphs [0005]-[0021] and figures 1, 2. | 1-11 |
| A | JP 10-185177A (DAIDO STEEL CO LTD) 14 July 1998<br>See abstract, claim 1, paragraphs [0016]-[0026] and figures 1, 2. | 1-11 |

|  | ☐ Further documents are listed in the continuation of Box C. | ☒ See patent family annex. |
| --- | --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 05 AUGUST 2014 (05.08.2014) | **06 AUGUST 2014 (06.08.2014)** |
| Name and mailing address of the ISA/**KR**<br>Korean Intellectual Property Office<br>Government Complex-Daejeon, 189 Seonsa-ro, Daejeon 302-701, Republic of Korea<br>Facsimile No. 82-42-472-7140 | Authorized officer<br><br>Telephone No. |

Form PCT/ISA/210 (second sheet) (July 2009)

INTERNATIONAL SEARCH REPORT
Information on patent family members

International application No.

**PCT/KR2014/006440**

| Patent document cited in search report | Publication date | Patent family member | Publication date |
|---|---|---|---|
| JP 08-061620A | 08/03/1996 | JP 3267454 B2 | 18/03/2002 |
| JP 06-147461A | 27/05/1994 | JP 2046844 C<br>JP 7074692 B | 25/04/1996<br>09/08/1995 |
| JP 08-035649A | 06/02/1996 | JP 3159606 B2 | 23/04/2001 |
| JP 10-185177A | 14/07/1998 | NONE | |

Form PCT/ISA/210 (patent family annex) (July 2009)